# EUROPEAN PATENT APPLICATION

(11) **EP 4 606 942 A1**
(43) Date of publication of application: **27.08.2025**
(21) Application number: 24159630.3
(22) Date of filing: 26.02.2024
(51) Int. Cl.: D06F 25/00, D06F 58/04

(54) **MOTOR BRACKET FOR A HOUSEHOLD APPLIANCE**

(71) Applicant: BSH Hausgeräte GmbH, 81739 München (DE)
(72) Inventor: Wilczynski, Adam, 91-601 Lodz (PL); Wuttge, Oliver, 12157 Berlin (DE); Bork, Christoph, 10247 Berlin (DE); Drebant, Alexander, 12207 Berlin (DE); Giercarz, Tomasz, 91-601 Lodz (PL); Krüger, Robert, 15732 Eichwalde (DE)

(57) **Abstract**

The invention relates to a motor bracket (10) for a household appliance, having a first side (11) and a second side (12), wherein the first side and the second side of the motor bracket are connected to one another by at least one opening (13), wherein the motor bracket is arranged to receive a motor (20) on the first side and to connect to a household appliance (100) on the second side, wherein the motor bracket (10) can be connected to the household appliance from the first side (11) via fastening means, wherein the second side (12) of the motor bracket is arranged to form part of a wall of a fluid channel of the household appliance. Furthermore, the invention relates to a motor arrangement (30) for a household appliance and a household appliance.

## Description

The present invention relates to a motor bracket for a household appliance, comprising a first side and a second side, wherein the first side and the second side of the motor bracket are connected to each other by at least one opening. The invention further relates to a motor arrangement for a household appliance and a household appliance.

Electric motors are used in various household appliances to drive actuators or transfer fluids. For example, electric motors are known to drive fan wheels or pump impellers in order to move liquids or process air flows. In dryers or washer-dryers, for example, fan wheels are arranged in a process air channel and are driven by an electric motor in order to move process air and thus remove moisture from a load of laundry positioned inside the drum. In tumble dryers usually an electric motor is utilized for rotation of the drum and for driving of the fan wheel in order to move the process air within the process air channel. Thus, in most common driers a repair of the electric motor requires the disassembly of the air channel and of multiple housing elements. Such arrangement of the electric motor also results in a more difficult assembly and in particular disassembly process.

It is therefore the problem of the present invention to create a motor bracket and a motor arrangement for a household appliance which can be easily assembled and disassembled.

This problem is solved by a motor bracket according to claim 1, by a motor arrangement according to claim 6 and by a household appliance according to the features of claim 10. Advantageous embodiments are set out in the dependent claims.

According to one aspect of the present invention, a motor bracket for a household appliance is provided. The motor bracket has a first side and a second side, wherein the first side and the second side of the motor bracket are connected to each other by at least one opening. For this purpose, the motor bracket can have a disc-shaped or ring-shaped structure, wherein the cross-sectional shape of the motor bracket can deviate from a circular or ring shape at least in certain areas. In particular, the motor bracket can also be rectangular or polygonal in shape.

Furthermore, the motor bracket is designed to accommodate a motor on the first side and to connect it to a household appliance on the second side. The motor bracket acts as a fastening unit for the motor on or in the household appliance. Depending on the configuration, the motor can be connected to the motor bracket from the first side and/or from the second side. The motor bracket itself can for example be screwed to the household appliance from the first side by the fastening means. However, other fastening means can also be used to connect the motor bracket to the household appliance. For example, other fastening means, such as straps, clip connections, snap-in connections and the like can be used for this purpose.

Preferably, the second side of the motor bracket is configured to form part of a wall of a fluid channel of the household appliance. Thus, the motor bracket can position a pump impeller or a fan wheel inside the fluid channel driven by the motor and at the same time arrange the motor as a drive motor outside the fluid channel. This measure enables particularly easy assembly and disassembly of the motor and also allows the electric motor to be stored in a dry environment outside the fluid channel.

According to a further aspect of the invention, a motor arrangement for a household appliance is provided. The motor arrangement has a motor bracket according to the invention and a motor which is attached to the motor bracket. The motor may comprise a first axial end-side and a second axial end-side. The motor can be attached to the motor bracket at the first and/or at the second axial end-side e.g. by any fastening means.

A drive shaft of the motor extends through the opening of the motor mount / bracket and is arranged to drive at least one fan wheel.

According to a further aspect of the invention, a household appliance is provided. The household appliance has a fluid channel with an access opening and a motor arrangement according to the invention. For this purpose, sealing means can be provided on the access opening and/or on the motor bracket. By attaching the motor bracket to the motor, a fan wheel that can be driven by the motor is positioned in the fluid channel. At the same time, the fluid channel can be closed by the motor bracket and the first side of the electric motor, thus preventing any openings, distortions or interruptions of the internal surfaces of the process air channel. Thus, the fluid dynamics inside the process air channel can be optimized.

By forming part of the wall of the fluid channel, additional fastening elements or support elements can be omitted. The fluid channel can also be particularly aerodynamically optimized.

The motor bracket according to the invention can be used in all types of household appliances in which a fluid (liquid or gas) has to be conveyed or moved through a fluid channel. For example, the motor bracket and the motor arrangement can be used in washing machines, washer-dryers, tumble dryers, dishwashers and the like.

In one embodiment, the first side of the motor bracket is designed to accommodate the motor on the first side. In an alternative embodiment, the first side of the motor bracket is designed to accommodate a side of the motor e.g. such that the shaft of the motor is not directly facing the opening.

In one embodiment the first side of the motor bracket is configured to receive and/or attach the motor on the end-face of the motor. Alternatively the first side of the motor bracket is configured to receive and/or attached the motor sideward. Thus, the motor can contact the motor bracket partially at one side and the fixation of the motor can be provided in different location or by different parts.

For example an accommodation and fixation of the motor can be performed on the first side of the motor bracket. Thus, a user may not require to reach the second side in order to remove the fastening means of the motor. Alternatively the accommodation and fixation of the motor can be performed on the second side of the motor bracket. Alternatively the accommodation of the motor may be performed on first side of the motor bracket and the fixation may be performed on or through second side. Thus, in order to dismantle the motor, a user requires to reach the second side of the motor bracket to remove fastening means. Alternatively, the accommodation of the motor may be performed on second side of the motor bracket and the fixation may be performed on or through first side of the motor bracket.

Preferably, the at least one opening is designed to accommodate at least one drive shaft of the motor and/or a power transmission unit.

This measure allows the motor to be positioned outside the fluid channel. Depending on the design, the motor can be attached at the first side of the motor bracket so that the motor shaft can protrude into the fluid channel through the opening. Alternatively, the motor can also be attached sideward to the first side of the motor bracket so that a power transmission, for example in the form of a gearbox, a belt or a chain, can be guided into the fluid channel, e.g. to drive a fan wheel or a pump impeller. Thus, the motor can be arranged such that the rotation axis of the motor is not parallel to the rotation axis of the fan wheel. For example the rotation axis of the motor can be arranged in an angle of 90° or less with regard to the rotation axis of the fan wheel. Depending on the design, by providing this attachment possibility, the motor can also be used to deflect or move actuators, levers and the like, which may be located in the fluid channel. Any transmission unit or transmission means, e.g. gearbox, belt, chain and the like, can be arranged at the first side of the motor bracket and/or can at least partially extend into the fluid channel through the opening of the motor bracket.

According to a further embodiment, the opening has an axially and/or radially acting first seal, wherein the first seal is positioned in a first receiving section of the motor bracket or the first seal is formed integrally with the motor bracket and/or the first seal is formed or attached at a motor shield of the motor or directly at the motor motor. This measure allows the motor and/or the shaft of the motor to extend into the fluid channel in a fluid-tight manner. The first receiving section may be arranged inside the opening or adjacent to the opening in order to enable the first seal to protrude from or extend into the opening of the motor bracket. In case the first seal is part of the motor or the motor shield, the first seal may protrude or extend into the opening.

The motor can be an electric motor. Furthermore, the motor can be designed in such a way that the motor can rotate or linearly actuate the drive shaft.

According to a further embodiment example, the motor bracket has at least a second seal. This allows the motor bracket to be sealed off from the fluid channel.

Preferably, the second seal is radially circumferential and is positioned on the second side and/or on the outside between the first side and the second side of the motor bracket. Depending on the configuration, the second seal is positioned in a second receiving section or is formed integrally with the motor bracket. The second receiving section and also the first receiving section can, for example, each be shaped as a receiving groove or receiving rib for receiving the seals. Depending on the design, the receiving sections can also be designed as flat or even surfaces in order to create an adhesive bond between the motor bracket and the seals.

The motor bracket can be made of metal or plastic, for example. A seal may be designed integrally with the motor bracket and can be produced as part of a two-component injection moulding process or subsequently connected to the motor bracket by means of a material bond or without material bond e.g. by form fit or friction fit. Alternatively, the seal can be integrally formed with the motor bracket and made of same material as the motor bracket. For example, the seal can be made of plastic material and formed as a thin layer or foil which may bend and thus seal a component or shaft.

The use of seals in the motor bracket can enable greater efficiency in the drying of textiles in tumble dryers. Moreover the motor bracket can also be manufactured in a simple and cost-efficient manner. The manufacturing and mounting process can further be simplified by separate the manufacturing of the motor bracket and of the motor end face housing. In addition, such a sealed motor bracket can effectively protect the motor from moisture or liquids and extend the service life of the motor.

According to a further embodiment, at least one cable holder is arranged on the first side of the motor bracket. Preferably, the cable holder is in the form of a hook, a clip or a clamp. The use of a cable holder makes it possible to position the electrical connection cables of the motor during assembly or disassembly of the motor. This means that the electrical connection cables do not have to be held or stored separately.

Furthermore, in an advantageous embodiment, the cable holder can be used to align or orientate the motor bracket relative to the access opening or the fluid channel. For this purpose, one or more markings can be provided in the area of the access opening, for example to set an alignment of the cable holder in relation to the markings during the orientation of the motor bracket. This measure can additionally facilitate and accelerate the installation of the motor bracket with the electric motor in the household appliance.

The cable holder can advantageously be designed to be integral with the motor bracket. Depending on the design, the cable holder can also be subsequently attached to the motor bracket with a force-fit and/or material-fit.

According to a further embodiment example, the motor has a motor shield which can be arranged at an axial end face side of the motor through which the shaft is guided out of the motor. Such a motor can preferably be attached to the motor bracket at the first side of the motor bracket. Depending on the configuration, the motor shield can be attached at a front side and/or at a rear side of the motor. Ideally, the motor shield of the motor is designed to close the at least one opening of the motor bracket in a fluid-tight manner when the motor is attached to the first side of the motor bracket. This measure can achieve a compact motor arrangement. Furthermore, the motor shield of the motor can fulfil multiple tasks simultaneously, which reduces the variety of components.

Based on a further embodiment, the motor bracket comprises an integral section that is configured as a motor shield. Thus, the opening of the motor bracket enables the shaft of the motor to extend through it into the fluid channel. The motor can be attached at or to the first side of the motor bracket and the section of the motor bracket may cover the motor at least partially forming a motor shield or part of a motor housing. Thus, the motor bracket and the motor shield may be formed as a one-piece component. Such solution may even further simplify the manufacturing and mounting process.

Preferably, the housing section and/or the motor bracket can form part of the fluid channel in an assembled state of the motor arrangement in or on the household appliance.

According to a further embodiment, the access opening has at least one sealing rib running around the motor bracket at least in some areas. Such a sealing rib can advantageously be used for the precise arrangement and fastening of a sealing cover of the motor arrangement. Depending on the application, the sealing rib can have a sealing task and a positioning task with regard to the sealing cover. Thus, the attachment of the sealing cover may be simplified. The sealing rib can be formed as a flexible wall or foil which may flex or bend based on mechanical load of the sealing cover.

According to a further embodiment, the sealing rib has a sealing part, which may be arranged at the axial end face and/or at radial face sides of the sealing rib, which is arranged on the sealing rib or is integral formed with the sealing rib. This allows the sealing cover to seal the motor arrangement in a fluid-tight manner from external environment. The sealing cover may also protect the motor from external contact.

Based on a further embodiment, the sealing rib can be configured to provide a positioning task and to hold and/or position the sealing cover at least temporally. Thus during the manufacturing process of the household appliance, the sealing rib may hold the sealing cover until it is attached with screws, bolts, nuts and the like.

According to a further embodiment example, the household appliance has a sealing cover for covering the motor arrangement in order to prevent contact of the motor arrangement with the outside. At least one section of the sealing cover is pressed against the sealing rib and/or against the seal of the sealing rib in a closed state of the sealing cover. This measure enables the motor arrangement to be sealed against an external environment. The cover can, for example, form part of a housing of the household appliance.

The advantages and features explained above in connection with the device also apply analogously to the method and vice versa. Individual features or aspects of the present invention can be combined with each other and have the advantages explained in this context.

In the following, the invention is explained in detail by means of advantageous embodiments with reference to the attached figures. The figures show:
- Fig. 1: a schematic exploded view illustrating a motor arrangement for a household appliance according to one embodiment.
- Fig. 2: a perspective view of the motor arrangement from Fig. 1.
- Fig. 3: a cross-section of a motor bracket according to the invention according to one embodiment.
- Fig. 4: a detailed view illustrating a mode of operation of a sealing cover of the household appliance according to a further embodiment.
- Fig. 5: a detailed view of the motor bracket from Fig. 1 illustrating a cable mount.

In the figures, identical or corresponding elements are labelled with the same reference signs. Values and characteristics such as numerical values, shapes, components, positions of components and the way in which the components are connected to each other are merely illustrative and not restrictive. For reasons of clarity and to improve recognisability, different scales are sometimes used in the drawings.

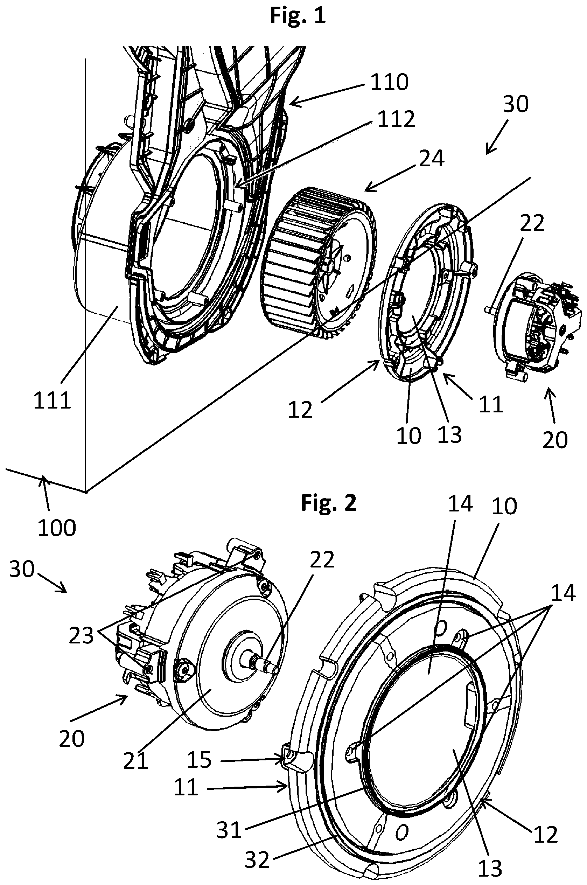

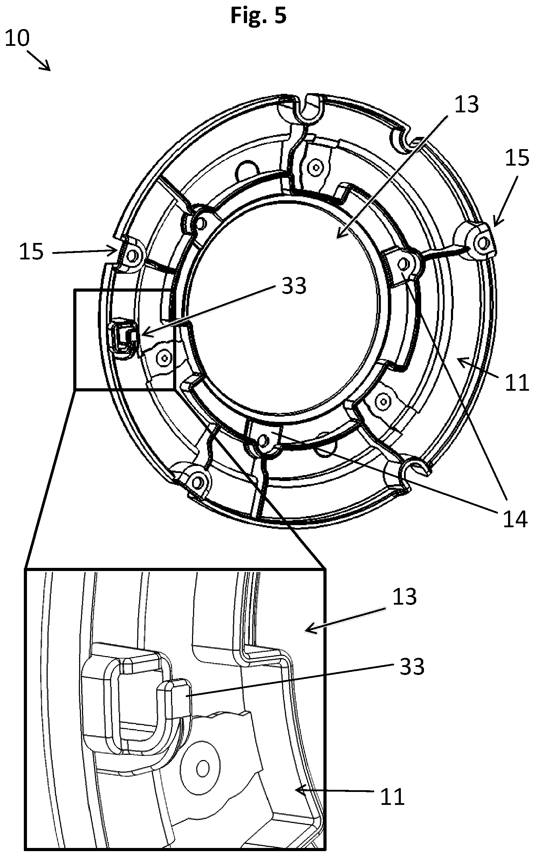

Fig. 1 shows a schematic exploded view illustrating a motor arrangement 30 for a household appliance 100 according to one embodiment. The motor bracket 10 has a first side 11 and a second side 12, wherein the first side 11 and the second side 12 of the motor bracket 10 are connected to one another by an opening 13. In the illustrated embodiment, the motor bracket 10 has a disc or plate shape comprising a ring shaped cross-section with the central opening 13 and is shown particularly clearly in Fig. 5.

The motor bracket 10 is designed to receive/accommodate a motor 20 on the first side 11 and to be connected to the household appliance 100 on the second side 12. The motor bracket 10 acts as a fastening unit for the motor 20 on or in the household appliance 100.

In the example shown, the motor 20 is screwed to the motor bracket 10 from the second side 12. For this purpose, the motor 20 can be brought into contact with the first side 11 of the motor bracket 10 and screwed into the motor bracket 10 via corresponding through-holes 14.

The through-holes 14 are visualized in Fig. 2. The motor 20 has a motor shield 21 that may be defined as an end-face housing or as a part of a motor housing, through which a drive shaft 22 is guided out of the motor 20. The motor shield 21 of the motor 20 can extend axially or radially. Such a motor 20 can preferably be attached to the motor bracket 10 at the first side. In the embodiment example shown, the motor shield 21 is designed to close the opening 13 of the motor bracket 10 in a fluid-tight manner when the motor 20 is attached to the first side 11.

The motor shield 21 has counter sections 23 corresponding to the selected fastening means (not shown), for example in the form of internal threads 23, into which screw connections can engage. In an alternative embodiment, the counter sections 23 can be designed as through-holes and the through-holes 14 in the motor bracket 10 can be designed as counter sections.

In the embodiment example shown, the motor bracket 10 itself can be connected to the household appliance 100 at the first side 11 of the motor bracket 10. Technically, this can be done particularly easily by means of screw connections or by any other fastening means 15 at the edge of the motor bracket 10. Such fastening means 15 can extend through the second side 12 of the motor bracket 10 to the first side 11 of the motor bracket 10 in order to fix the motor 20 at the first side 11 of the motor bracket 10. Alternatively, the fastening means may extend through parts of the motor 20, which is arranged at the first side 11, into the first side 11 of the motor bracket 10 and thus attach the motor 20.

The second side 12 of the motor bracket 10 is arranged to form part of a wall 111 of a fluid channel 110 of the household appliance 100. Thus, the motor bracket 10 can position a fan wheel 24 driven by the motor 20 within the fluid channel 110 and at the same time arrange the motor 20 as a drive motor outside the fluid channel 110. As an example, the fan wheel 24 is designed as a radial fan wheel.

In the illustrated embodiment example, the household appliance 100 is designed as a tumble dryer and has a fluid channel 110 in the form of a process air channel with an access opening 112 and a motor arrangement 30. The motor bracket 10 is also illustrated in Fig. 2 and is attached in or to the access opening 112 of the fluid channel 110.

The motor arrangement 30 with the attached motor 20 is designed to close the access opening 112 in a fluid-tight manner. For this purpose, exemplary sealing means 31, 32 are provided on the motor bracket 10.

By attaching the motor bracket 10 to the motor 20, a fan wheel 24 that can be driven by the motor 20 is positioned in the fluid channel 110. At the same time, in the embodiment example shown, the fluid channel 110 is also closed. The heads of the fastening means 15 may remain in the fluid channel or may be hidden in a recess or may be integrally inserted into the motor bracket.

The motor shield 21 of the motor 20 and the motor bracket 10 thus form part of a wall 111 of the fluid channel 110 and close the access opening 112.

Fig. 2 shows a perspective view of the motor arrangement 30 from Fig. 1. For illustrative purposes, Fig. 2 shows the motor arrangement 30 from a different perspective angle. The motor arrangement 30 has the motor bracket 10 and the motor 20, which is attached to the motor bracket 10. The drive shaft 22 of the motor 20 extends through the opening 13 of the motor bracket 10 and is designed to drive the fan wheel 24.

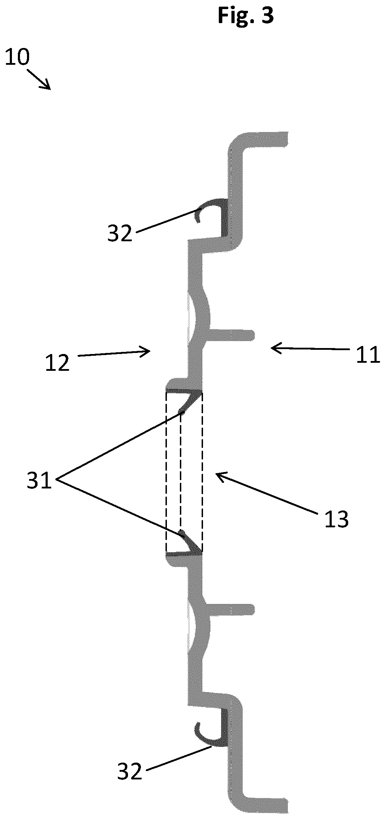

A first seal 31 is provided at the opening 13 for a fluid-tight connection between the motor bracket 10 and the motor shield 21 of the motor 20, which protrudes or extends into or closes the opening 13 of the motor bracket 10. Fig. 3 shows a sectional view of the motor bracket 10 according to the invention according to one embodiment, which illustrates the first seal 31 and a second seal 32.

The first seal 31 and the second seal 32 are formed integrally with the motor bracket 10 as an example. This measure allows the motor 20 to be separated from the fluid channel 110 in a fluid-tight manner.

The second seal 32 serves to seal the motor bracket 10 with respect to the fluid channel 110 and acts axially. In the process, the second seal 32 can be pressed axially against the wall 111 of the fluid channel 110 in the region of the access opening 112.

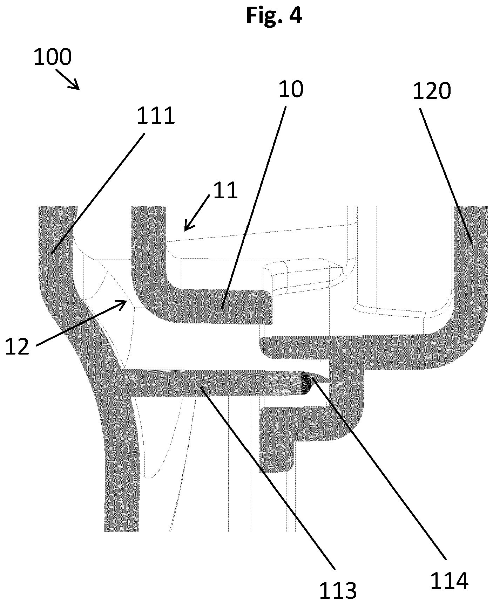

Fig. 4 shows a detailed view for illustrating a mode of operation of a sealing cover 120 of the household appliance 100 according to a further embodiment. In the illustrated embodiment example, the access opening 112 has at least one sealing rib 113 running around the motor bracket 10 at least in some areas. Such a sealing rib 113 can advantageously be used for precisely arranging and fastening the closure cover 120 of the motor arrangement 30 or the household appliance 100.

As an example, the sealing rib 113 may be formed flexible in order to provide sealing features. Due to flexible form of the sealing rib 113, the sealing rib 113 may act as a sealing of the sealing cover 120. Alternatively, the sealing rib 113 may have sealing parts or sections 114 in order to further improve the sealing function.

In the shown example, the sealing rib 113 comprises a sealing section 114 at its axial end, which may be formed integrally with the sealing rib 113. As a result, the sealing cover 120 can seal the motor arrangement 30 at the rear or with respect to an external environment of the household appliance 100.

Fig. 5 shows a detailed view of the motor bracket 10 from Fig. 1 to illustrate a cable holder 33. The cable mount 33 is integral with the motor bracket 10.

The cable holder 33 is exemplarily arranged on the first side 11 of the motor bracket 10. The cable holder 33 is designed in the form of a hook. The use of a cable holder 33 makes it possible to position or hook in the electrical connection cables (not shown) of the motor 20 during assembly or disassembly of the motor 20.

### List of reference symbols

- 100 -: Household appliance
- 110 -: Fluid channel
- 111 -: Wall
- 112 -: Access opening
- 113 -: Sealing rib
- 114 -: Sealing section
- 120 -: Cover

- 10 -: Motor bracket
- 11 -: first side
- 12 -: second side
- 13 -: Opening
- 14 -: Through-holes
- 15 -: Fastening means

- 20 -: Motor
- 21 -: Motor shield
- 22 -: Drive shaft
- 23 -: Counter sections
- 24 -: Fan wheel

- 30 -: Motor arrangement
- 31 -: first seal
- 32 -: second seal
- 33 -: Cable holder

## Claims

1. Motor bracket (10) for a household appliance (100), having a first side (11) and a second side (12), the first side (11) and the second side (12) of the motor bracket (10) being connected to one another by at least one opening (13), the motor bracket (10) being configured to accommodate a motor (20) on the first side (11) and to connect it to a household appliance (100) on the second side (12), wherein the motor bracket (10) can be connected to the household appliance (100) from the first side (11) via fastening means, wherein the second side (12) of the motor bracket (10) is configured to form part of a wall (111) of a fluid channel (110) of the household appliance (100).

2. Motor bracket according to claim 1, wherein the first side (11) of the motor bracket (10) is configured to receive and/or attach the motor (20) on the end-face of the motor (20); or wherein the first side (11) of the motor bracket (10) is configured to receive and/or attached the motor (20) sidewards, wherein the at least one opening (13) is arranged to receive at least one drive shaft (22) of the motor (20) and/or a transmission unit.

3. Motor bracket according to claim 1 or 2, wherein the opening (13) comprises an axially and/or radially acting first seal (31), wherein the first seal (31) is positioned in a first receiving section of the motor bracket (10) or is formed integrally with the motor bracket (10) and/or the first seal (31) is formed or attached to a motor shield (31) of the motor (20) and/or the first seal (31) is formed or directly attached to the motor (20).

4. Motor bracket according to one of claims 1 to 3, wherein the motor bracket (10) comprises at least one second seal (32), wherein the second seal (32) is radially circumferential and is positioned on the second side (12) and/or on the outside between the first side (11) and the second side (12), wherein the second seal (32) is positioned in a second receiving section of the motor bracket (10) or is formed integrally with the motor bracket (10).

5. The motor bracket according to any one of claims 1 to 4, wherein at least one cable holder (33) is arranged on the motor bracket (10), wherein the cable holder (33) is in the form of a hook, a clip or in the form of a clamp.

6. A motor arrangement (30) for a household appliance (100), comprising a motor bracket (10) according to any one of the preceding claims and comprising a motor (20) attached to the motor bracket (10), wherein a drive shaft (22) of the motor (20) extends through an opening (13) of the motor bracket (10) and is adapted to drive at least one fan wheel (24).

7. Motor arrangement according to claim 6, wherein the motor (20) has a motor shield (21), through which the drive shaft (22) is guided out of the motor (20), wherein the motor shield (21) is arranged to close the at least one opening (13) of the motor bracket (10) in a fluid-tight manner in a state of the motor (20) fastened to the first side (11).

8. Motor arrangement according to claim 6, wherein the motor bracket (10) comprises an integral section that is configured as a motor shield (21).

9. Household appliance (100), comprising a fluid channel (110) with an access opening (112), comprising a motor arrangement (30) according to one of claims 6 to 7, wherein a motor bracket (10) is fixed in or at the access opening (112) and is arranged with a fixed motor (20) to close the access opening (112) in a fluid-tight manner, wherein by fixing the motor bracket (10) with the motor (20), a fan wheel (24) drivable by the motor (20) is positioned in the fluid channel (110).

10. Household appliance according to claim 9, wherein the access opening (112) has at least one sealing rib (113) running around the motor bracket (10) at least in certain areas, wherein the sealing rib (113) is configured to be pressed against a cover (120).

11. Household appliance according to claim 10, wherein the sealing rib (113) is configured to at least temporally position and/or hold the cover (120) in a mounting position.

12. Household appliance according to claim 10, wherein the appliance (100) has a cover (120) for covering the motor arrangement (30) on the outside, wherein at least one section of the cover (120) is pressed against the sealing rib (113) and/or against a seal section (114) of the sealing rib (113) in a closed state of the cover (120).
